# EUROPÄISCHE PATENTSCHRIFT

(11) **EP 2 244 141 B1**
(45) Veröffentlichungstag und Bekanntmachung des Hinweises auf die Patenterteilung: **10.10.2012**
(21) Anmeldenummer: 10160686.1
(22) Anmeldetag: 22.04.2010
(51) Int. Cl.: G05B 17/02, G01M 15/00

(54) **Verfahren und Vorrichtung zur Verifizierung eines Automatisierungssystems**
Method and device for verifying an automation system
Procédé et dispositif destinés à la vérification d'un système d'automatisation

(30) Priorität: 23.04.2009 AT 2572009
(43) Veröffentlichungstag der Anmeldung: 27.10.2010
(73) Patentinhaber: AVL List GmbH, 8020 Graz (AT)
(72) Erfinder: Krainz, DI Manfred, 8045 Graz (AT); Weidinger, Christoph, 8051 Graz (AT); Klaric, Gregor, 8010 Graz (AT)
(74) Vertreter: Weiss, Christian

(56) Entgegenhaltungen:
- WO-A1-2008/152010
- AT-A2- 505 326

## Beschreibung

Die gegenständliche Erfindung betrifft ein Verfahren zur Verifizierung eines Automatisierungssystems für die Durchführung eines festgelegten, Daten oder Messwerte liefernden Testlaufes und/oder einer auf diesen Daten oder Messwerten beruhenden Ergebnisberechnung und einer Vorrichtung dazu.

Bestimmte Tests an Fahrzeugen müssen gemäß einem vorgegebenen und festgeschriebenen Standard durchgeführt werden. Solche Standards werden z.B. vom Gesetzgeber vorgeschrieben, um z.B. die Abgasemissionen eines Fahrzeuges zu bestimmen. Diese Standards umfassen Vorschriften was und wie etwas zu messen ist (Testlauf) und wie die Messergebnisse weiterverarbeitet bzw. interpretiert werden müssen (Ergebnisberechnung). Der Testlauf selbst findet dabei auf einem Prüfstand mit einem Prüfling (Verbrennungsmotor, Antriebsstrang, Fahrzeug, etc.) statt, auf dem der vorgegebene Testlauf abgefahren wird. Diese Prüfstände werden dabei von einem Automatisierungssystem, wie z.B. die PUMA-Familie des Anmelders, gesteuert und geregelt, wobei vollautomatische Testläufe generierbar und exekutierbar sind. Das schwierige an solchen Testläufen liegt darin, nachzuweisen bzw. festzustellen, dass der Testlauf bzw. die Weiterverarbeitung der Messergebnisse und das daraus entstehende Endergebnis den vorgegebenen Vorschriften entsprechen. Ein solcher Nachweis ist aber unumgänglich, um das Testsystem (Automatisierungssystem, Prüfstand, Testlauf) für die Durchführung des gewünschten Tests zu verifizieren. Für jede neue Einrichtung eines solchen Testsystems muss daher sehr viel Zeit investiert werden, um dies sicherzustellen.

Um eine Entwicklungsanlage einer komplexen Entwicklungsumgebung, wie z.B. eine Prüfstandsumgebung für Motoren-, Antriebsstrang-, Getriebe-, Fahrzeugkomponenten- oder Fahrzeugentwicklung, mit Automatisierungseinrichtung und Entwicklungswerkzeugen simulieren zu können, wurde in der WO 2008/152010 A1 vorgeschlagen, in einer Simulationseinrichtung Entwicklungsdaten erzeugende Gerätemodelle laufen zu lassen, wobei die Gerätemodelle zumindest teilweise Simulationsdaten aus einem Prüfmodell verarbeiten und eine Anzahl von realen Entwicklungswerkzeugen über reale Schnittstellen mit der Automatisierungseinrichtung und/oder der Simulationseinrichtung verbunden werden und die Entwicklungswerkzeuge die Entwicklungsdaten verarbeiten.

Am Automatisierungssystem läuft die Automatisierungssoftware, die jedoch mehr oder weniger regelmäßig aktualisiert wird bzw. werden muss. Ebenso ist es denkbar, dass die gesetzlichen Vorschriften zur Durchführung eines Testlaufes geändert werden. Jeder Eingriff in das bestehende (und bereits verifizierte) Automatisierungssystem stellt aber die Richtigkeit der Prüfergebnisse erneut in Frage und es muss wieder mühsam das Einhalten der vorgegebenen Vorschriften durch das Gesamtsystem nachgewiesen werden.

Es ist daher eine Aufgabe der gegenständlichen Erfindung, ein Verfahren anzugeben, das es ermöglicht auf einfache und sichere Weise eine Verifizierung des Automatisierungssystems und/oder der Ergebnisberechnung für einen festgelegten Testlauf durchzuführen.

Diese Aufgabe wird gemäß den Merkmalen der unabhängigen Ansprüche 1 und 5 gelöst. Dabei ist vorgesehen, die Richtigkeit eines Testlaufs nur einmal zu überprüfen und bei festgestellter Korrektheit die den Testlauf definierenden Referenzdaten als Referenzstandard abzuspeichern. Wird im Automatisierungssystem eine Änderung durchgeführt, ist es ausreichend, den Testlauf erneut durchzuführen und die Referenzdaten des Referenzstandards mit den neuen Referenzdaten zu vergleichen. Damit kann die Verifizierung bei einer Änderung des Automatisierungssystems automatisiert, einfach und rasch durchgeführt werden. Insgesamt kann so ein Zyklus für eine notwendige erneute Verifizierung eines Automatisierungssystems gegenüber einer vorgegebenen Vorschrift deutlich vereinfacht und verkürzt werden.

Bevorzugt werden als Referenzdaten die berechneten Endergebnisse des durchgeführten Testlaufs und/oder die Konfiguration der Simulationseinrichtung und/oder eine Definition der manuellen oder automatisierten Eingaben zum Steuern des Prüfstandes und/oder von der Simulationseinrichtung für den Testlauf erzeugten Daten bzw. Messwerte und/oder eine Definition des Testlaufes gespeichert.

Zur Überprüfung der korrekten Funktion der Automatisierungseinrichtung werden bevorzugt die korrekte Ansteuerung der Prüfumgebung und/oder die korrekte Übernahme und Verarbeitung der Daten bzw. Messwerte und/oder die Auswertealgorithmen der Ergebnisberechnung überprüft, was manuell oder teilmanuell und auch mit Unterstützung bestimmter Tools erfolgen kann.

Wenn durch Auswertung der Referenzdaten im Fehlerfall Rückschlüsse auf den betroffenen Problembereich gezogen werden, kann eine mögliche Fehlerquelle identifiziert oder eingegrenzt werden, womit die Fehlersuche erheblich vereinfacht und beschleunigt wird. Dies vereinfacht und verkürzt den Zyklus für eine notwendige erneute Verifizierung eines Automatisierungssystems gegenüber einer vorgegebenen Vorschrift weiter.

Vorteilhaft ist im Automatisierungssystem eine Speichereinheit vorgesehen, in der verschiedene Referenzstandards abgespeichert sind, um rasch auf bestimmte Referenzstandards zugreifen zu können.

Vorteilhaft kann ein Hostsystem vorgesehen sein, das mit dem Automatisierungssystem verbunden wird, wodurch es möglich ist, über das Hostsystem Testläufe über geeignete Bedienschnittstellen zu generieren und zu verwalten und/oder Testdaten oder Testläufe zu speichern oder auszuwerten und/oder vorgegebene Testläufe oder Konfigurationsdaten auf das Automatisierungssystem zu spielen und/oder mehrere Automatisierungssysteme miteinander zu verbinden. Dazu wird besonders vorteilhaft im Hostsystem ein Datenspeicher vorgesehen, um einfach auf bereits bestehende Testläufe und Konfigurationen zugreifen zu können.

Eine bestimmte Konfiguration einer Simulationseinrichtung mit sämtlichen Prüfmodellen und Gerätemodellen kann sehr einfach mittels eines Simulationskonfigurators erfolgen, wodurch die Konfiguration und Parametrierung der Simulationsumgebung vereinfacht wird. Eine weitere Vereinfachung kann erzielt werden, wenn im Simulationskonfigurator eine Prüf- und/oder Gerätemodelldatenbank vorgesehen ist, da dann vorgefertigte Teile nur mehr zusammengestellt und gegebenenfalls parametriert werden müssen.

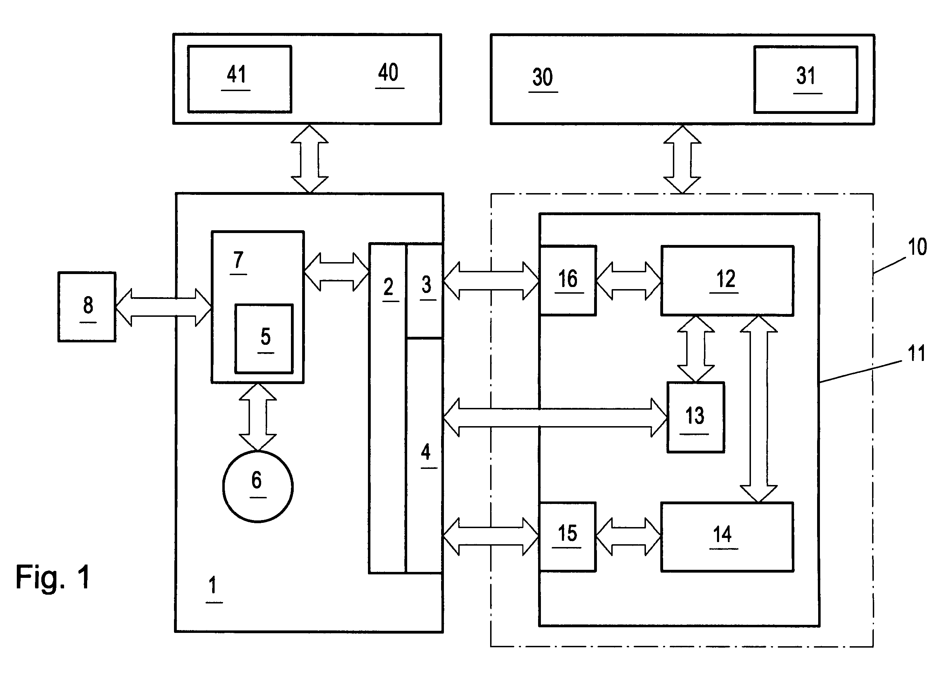

Die gegenständliche Erfindung wird im Nachfolgenden anhand der schematischen, nicht einschränkenden, ein bevorzugtes Ausführungsbeispiel zeigende Figur 1 beschrieben, die ein Blockdiagramm eines Automatisierungssystem mit einer Automatisierungseinrichtung und mit simulierter Prüfstandsumgebung zeigt.

Die Automatisierungseinrichtung 1 eines Automatisierungssystems, wie in Fig. 1 dargestellt, kann je nach Anwendung, z.B. Testen der Abgasemissionen eines Fahrzeuges oder Verbrennungsmotors (Prüfling), unterschiedliche Komponenten in verschiedenster Kombination enthalten, wie z.B. in diesem Beispiel eine Steuereinrichtung 2 für die Steuerung einer Belastungsmaschine (Dynamometer) und/oder eines Prüflings, Schnittstellen 3 für die Kommunikation mit dem Prüfstand 11 bzw. Einrichtungen auf dem Prüfstand 11, Gerätetreiber 4 für angeschlossene Datenerfassungsgeräte, wie z.B. Messgeräte, etc. In der Automatisierungseinrichtung 1 kann auch eine Auswerteeinheit 7 vorgesehen sein, die die vom Prüfstand 11 erhaltenen Daten oder Messwerte verarbeitet. Die Steuereinheit 2 und die Auswerteeinheit 7 könnten auch in einer Einheit kombiniert sein. In der Automatisierungseinrichtung 1, z.B. in der Auswerteeinheit 7, läuft die Automatisierungssoftware 5, die unter anderem auch für die interne Steuerung der einzelnen Komponenten, aber auch für die Zurverfügungstellung einer HMI-Schnittstelle, z.B. für die Eingabe oder Anzeige von Messwerten oder Systemgrößen, verantwortlich ist. Viele Funktionen der Komponenten der Automatisierungseinrichtung 1 sind in der Automatisierungssoftware 5 als ablauffähige Programme realisiert.

Um die Automatisierungseinrichtung 1 und die Ansteuerung des Prüfstandes 11 testen bzw. überprüfen zu können, ist vorgesehen den Prüfstand 11 mit Prüfling und allen erforderlichen Komponenten nicht real aufzubauen, sondern zu simulieren. Dazu ist im Automatisierungssystem eine Simulationseinrichtung 10, z.B. eine geeignete Simulationshardware, z.B. ein PC, dSpace^{®}, etc., vorgesehen, in der die Komponenten des Prüfstandes 11 und der Prüfling, wie z.B. ein Verbrennungsmotor, Abgaswege (Katalysatoren, Constant Volume Sampler (CVS), Verdünnungstunnel, Abgasentnahmen) für Benzin, Diesel und andere Kraftstoffe, Messgeräte, etc., in Form von geeigneten Prüfmodellen 12 nachgebildet werden. Ebenso kann das Verhalten von bestimmten Komponenten des Prüfstandes 11 oder des Prüflings (z.B. das Emissionsverhalten eines Verbrennungsmotors) durch die Prüfmodelle 12 nachgebildet werden. Die Prüfmodelle 12 können z.B. mathematische, physikalische Modelle sein und können z.B. in Matlab/Simulink^{®} implementiert sein. Die Prüfmodelle 12 sind dabei in der Regel ablauffähige Programme, die auf der Simulationshardware ablaufen und Simulationsdaten liefern. In der möglichen Implementierung der Prüfmodelle 12 und der Simulationshardware gibt es allerdings keinerlei Einschränkungen.

Für das Beispiel eines Motorenprüfstandes zum Test gesetzlicher Abgaszyklen oder eines Rollenprüfstandes zur Fahrzeugverifizierung dienen die Prüfmodelle 12 z.B. zur physikalischen Simulation der Abgase nach idealem Gasgesetz. Die Simulationsgüte der Prüfmodelle 12 kann durch den komponentenbasierenden Ansatz beliebig verfeinert werden. Wenn gewünscht und erforderlich können bestimmte Prüfmodelle 12 oder Teile des Prüfmodells 12 auch durch ein proprietäres Kundenmodell des Anwenders ersetzt werden. Die verwendete Simulationsgüte sollte zumindest ausreichend für die dem Test zugrunde liegenden Vorschriften bzw. Gesetze, wie z.B. EPA1065, sein.

Ebenso ist es vorteilhaft, die Simulation der im Prüfstand 11 verwendeten Datenerfassungsgeräte, wie z.B. Messgeräte, zu teilen. Vorzugsweise wird die Gerätesimulation in eine modellbasierte Simulation des physikalischen Geräteverhaltens (z.B. die Simulation der Beutel der CVS in Form des zeitlichen Verlaufs des Inhalts der Beutel bei Ansteuerung durch die Automatisierungseinrichtung 1, Simulation des zeitlichen Verlaufs der Konzentrationen der Abgaskomponenten, etc.), in eine Simulation des Verhaltens bei der Kalibrierung, und in eine Simulation der Kommunikation zur Automatisierungseinrichtung 1 aufgeteilt. Dazu können in der Simulationseinrichtung 10 Gerätemodelle 14 und Gerätekommunikationsmodelle 15 vorgesehen sein, wobei die Gerätemodelle 14 das physikalische Verhalten und/oder das Verhalten bei Kalibrierung und die Gerätekommunikationsmodelle 15 die Kommunikation mit den Gerätetreibern 4 der Automatisierungseinrichtung 1 (z.B. AK Protokoll auf TCP/IP oder V24) simulieren, wie in Fig. 1 dargestellt. Auf die separate Simulation der Kommunikation kann aber auch verzichtet werden und es reicht ein Gerätemodell 13 für Kommunikation und physikalisches Verhalten aus, das direkt mit den Gerätetreibern 4 der Automatisierungseinrichtung 1 kommuniziert.

Die Simulation in der Simulationseinrichtung 10 erfolgt dabei in einer Weise, dass das simulierte Verhalten der Geräte im Rahmen der für korrekte Auswertung der Messdaten erforderlichen Güte dem tatsächlichen Geräteverhalten entspricht. Die Gerätemodelle 13, 14 erzeugen dazu Daten oder Messwerte, in Abhängigkeit von der Simulation des Prüfstandes 11 und/oder des Prüflings durch die Prüfmodelle 12. Die Abhängigkeit ist dabei so zu verstehen, dass ein bestimmter Prüfstands- bzw. Prüflingszustand natürlich auch bestimmte Daten der Gerätemodelle bedingt. Die Gerätemodelle 13, 14 und die Prüfmodelle 12 können dazu auch Daten austauschen. An der Schnittstelle zwischen Simulationseinrichtung 10 und realer Automatisierungseinrichtung 1 kann kein Unterschied zur realen Welt festgestellt werden. Das betrifft sowohl die Kommunikation, als auch die von der Simulationseinrichtung 10 gelieferten Daten oder Messwerte (im Rahmen der Simulationsgüte).

Für die Kommunikation der Automatisierungseinrichtung 1 mit der Simulationseinrichtung 10 kann in der Simulationseinrichtung 10 auch eine I/O-Schnittstelle 16 vorgesehen sein, die mit der Schnittstelle 3 der Automatisierungseinrichtung 1 kommuniziert und so eine direkte Kommunikation zwischen Automatisierungseinrichtung 1 und Prüfmodellen 12 ermöglicht.

Dem Automatisierungssystem übergeordnet kann ein Hostsystem 40 sein, das z.B. dazu dient, Testläufe über geeignete Bedienschnittstellen zu generieren und zu verwalten, Testdaten oder Testläufe in einem Datenspeicher 41 zu speichern und auszuwerten, gespeicherte Testläufe oder Konfigurationsdaten auf die Automatisierungseinrichtung 1 zu spielen, mehrere Automatisierungseinrichtung 1 oder Prüfstände zu einer Prüffabrik miteinander zu verbinden, etc.

Die Simulationseinrichtung 10 kann durch einfaches Konfigurieren an die unterschiedlichen Prüfstandstypen, z.B. Motorprüfstand, Rollenprüfstand angepasst werden. Es können also unterschiedliche Prüfstandskomponenten und unterschiedliche Prüflinge in Form von Prüfmodellen 12 und Gerätemodellen 13, 14 kombiniert und entsprechend den Anforderungen parametriert werden. Damit kann die reale Automatisierungseinrichtung 1 für unterschiedliche Testzwecke bzw. Testläufe und unterschiedliche Prüfstandtypen verwendet werden. Dazu kann z.B. auch ein Simulationskonfigurator 30 mit entsprechenden I/O-Einheiten bzw. I/O-Schnittstellen, z.B. ein PC, vorgesehen sein. In diesem können in einer Prüf- und/oder Gerätemodelldatenbank 31 Modelle bestimmter Prüfstandstypen, Prüflingen und/oder Komponenten davon und/oder bestimmter Datenerfassungsgeräte hinterlegt sein, die abgerufen, kombiniert und parametriert werden können. Der Simulationskonfigurator 30 kann dabei selbstverständlich auch in das Hostsystem 40 integriert sein.

Da die Simulation der Prüfumgebung (Prüfstand, Prüfling, Komponenten, Messgeräte, etc.) auf der Simulationseinrichtung 10 bei derselben Ansteuerung durch die Automatisierungseinrichtung 1 reproduzierbar dieselben Ergebnisse liefert, kann sie zur Verifizierung des Automatisierungssystems, also z.B. der Automatisierungseinrichtung 1 und/oder der Ergebnisberechnung, aus den aus der Simulation gelieferten Daten bzw. Messwerten herangezogen werden.

Dazu wird für einen festgelegten Testlauf in einem ersten Schritt der festgelegte Testlauf mit der Simulation der Prüfumgebung durchgeführt. Die ordnungsgemäße Funktion der Simulationseinrichtung 10 ist dabei vorzugsweise bereits vorweg getestet und sichergestellt. In diesem Schritt kann die Funktion der Automatisierungseinrichtung 1 überprüft werden, also z.B. ob die Ansteuerung der Prüfumgebung (Prüfstand, Prüfling, Komponenten, Messgeräte, etc.) korrekt ist, ob die Daten bzw. Messwerte korrekt übernommen und verarbeitet werden, etc.. Außerdem können die Auswertealgorithmen der Ergebnisberechnung, die aus den Daten bzw. Messwerten die Endergebnisse des Tests berechnen, überprüft werden. Diese Überprüfung ist in der Regel ein manueller oder teilmanueller Vorgang, der sehr viel Zeit in Anspruch nehmen kann und fehleranfällig ist. Die Automatisierungseinrichtung 1 kann zur Unterstützung der Überprüfung eine HMI-Schnittstelle zu I/O-Geräten 8 zur Verfügung stellen, über die auf die Daten und Messwerte die zwischen der Automatisierungseinrichtung und der Simulationseinrichtung 10 gesendet werden, zugegriffen werden kann. Ebenso kann über eine solche HMI-Schnittstelle auch auf die Konfiguration und Parametrierung der Simulationseinrichtung 10 zugegriffen werden. Ebenso ist es denkbar bestimmte Tools, z.B. zur Datenauswertung, Datenaufbereitung, Berechnungstools, etc., für die Überprüfung einzusetzen.

Wenn die ordnungsgemäße Funktion der Automatisierungseinrichtung 1 und/oder der Ergebnisberechnung nachgewiesen ist, wird ein Referenzstandard erstellt, in dem die Simulationseinrichtung 10 und/oder den durchgeführten Testlauf definierende Referenzdaten gespeichert werden. Im Referenzstandard können z.B. die aus den aus dem Testlauf erhaltenen Daten oder Messwerte berechneten Endergebnisse des durchgeführten Testlaufs, z.B. in Form eines Ergebnisreports, gespeichert werden. Der Referenzstandard kann weiters die Konfiguration der Simulationseinrichtung 10, also im Wesentlichen ein Abbild des Prüfstands samt Prüfling, sowie darauf angeordnete Komponenten, Geräte und Messgeräte, etc., und/oder die Definition der Eingaben zum Steuern des Prüfstandes, z.B. manuelle Eingaben des Prüfstandfahrers (z.B. 3- oder 4-phasiges Fahren des Testlaufs) bzw. automatisierte Eingaben automatisierter Ansteuereinrichtungen (z.B. eines Schaltroboters oder eines Fahrroboters). Im Referenzstandard können auch die von der Simulationseinrichtung 10 für den Testlauf erhaltenen Daten bzw. Messwerte gespeichert sein, wobei natürlich auch nur ein Teil dieser Daten oder Messwerte gespeichert werden könne. Ebenfalls kann im Referenzstandard eine Definition des Testlaufes, also z.B. wie der Prüfstand 11 mit Prüfling von der Automatisierungseinrichtung 1 zur Durchführung des Testlaufes angesteuert wird.

Dieser Referenzstandard kann nun einfach verwendet werden, um eine Änderung im Automatisierungssystem, z.B. in der Automatisierungseinrichtung 1 bei einem Update der Automatisierungssoftware oder einer Änderung der Ergebnisberechnung (z.B. bei einer Änderung der gesetzlichen Vorgaben), zu überprüfen. Dazu muss lediglich der dem Referenzstandard zugrunde liegende Testlauf mit dem geänderten Automatisierungssystem, z.B. bei einer geänderter Automatisierungseinrichtung 1, wiederholt werden und die Referenzdaten des Referenzstandards mit den neu erzeugten Referenzdaten , z.B. in der Auswerteeinheit 7 der Automatisierungseinrichtung 1, verglichen werden, z.B. indem die berechneten Endergebnisse (z.B. in Form der Ergebnisreporte) des Referenzstandards miteinander verglichen werden. Bei Übereinstimmung ist das Automatisierungssystem bereits verifiziert. Sind die Ergebnisreports unterschiedlich kann durch Auswertung der Unterschiede versucht werden, die Fehlerquelle einzugrenzen und damit schneller zu finden. Durch die Simulation ist es dabei sogar möglich, Automatisierungssysteme verschiedener Hersteller zu verifizieren.

Durch eine Auswertung der Referenzdaten, z.B. der Endergebnisse, können im Fehlerfall auch Rückschlüsse auf den betroffenen Problembereich gezogen werden, da bestimmte Fehlerbilder einer bestimmten Fehlerquelle zuordenbar sind. Die Simulationseinrichtung 10 kann somit einerseits auch zur Fehleranalyse und andererseits als Tool der Qualitätssicherung verwendet werden. Zusätzlich kann dabei auch die Reaktion und Auswertung der Automatisierungseinrichtung 1 auf Gerätefehler, sowie die Reaktion und Auswertung der Automatisierungseinrichtung 1 auf Bedienfehler getestet werden.

Ebenso könnte am realen Prüfstand vor- bzw. nach einem Update der Automatisierungssoftware und/oder der Auswertesoftware ein Testlauf gegen die Simulationsumgebung gefahren werden, um damit sicherzustellen, dass der Prüfstand nach dem Update dieselben Ergebnisse liefert.

Dazu kann im Automatisierungssystem, wie z.B. in der Automatisierungseinrichtung 1, auch eine Speichereinheit 6, z.B. eine Datenbank, vorgesehen sein, in der verschiedene Referenzstandards für verschiedene Testläufe gespeichert sein können. Dies ermöglicht es, bei Bedarf sehr rasch einen bestimmten Referenzstandard abzurufen und mit aktuellen Testdaten zu vergleichen. Diese Speichereinheit 6 und/oder die Auswerteeinheit 7 könnte aber natürlich auch anderswo angeordnet sein, z.B. in einer externen Einheit, wie z.B. dem übergeordneten Hostsystem 40, was ermöglichen würde, von verschiedenen Automatisierungseinrichtungen 1 (z.B. einer Prüffabrik) auf hinterlegte Referenzstandards zuzugreifen und/oder Automatisierungssysteme zu verifizieren.

## Patentansprüche

1. Verfahren zur Verifizierung eines Automatisierungssystems für die Durchführung eines festgelegten, Daten oder Messwerte liefernden Testlaufes und/oder einer auf diesen Daten oder Messwerten beruhenden Ergebnisberechnung, wobei in einer Simulationseinrichtung ein Prüfstand und ein darauf zu prüfender Prüfling durch ein Prüfmodell und ein am Prüfstand angeordnetes Datenerfassungsgerät zur Erfassung von Daten oder eines Messwertes durch ein Gerätemodell nachgebildet werden und die Simulationseinrichtung gemäß dem durchzuführenden Testlauf von einer Automatisierungseinrichtung angesteuert wird und das Prüfmodell und Gerätemodell der Simulationseinrichtung Daten oder Messwerte erzeugt und diese an die Automatisierungseinrichtung sendet, wobei in einem ersten Schritt für den durchgeführten Testlauf die Funktion der Automatisierungseinrichtung und/oder der Ergebnisberechnung überprüft wird, **dadurch gekennzeichnet, dass** in einem zweiten Schritt nach dem Feststellen der ordnungsgemäßen Funktion der Automatisierungseinrichtung und/oder der Ergebnisberechnung ein Referenzstandard für den Testlauf erstellt wird, in dem die Simulationseinrichtung und/oder den durchgeführten Testlauf definierende Referenzdaten gespeichert werden und bei einer Änderung des Automatisierungssystems in einem dritten Schritt der Testlauf wiederholt wird und die daraus ermittelten Referenzdaten mit den Referenzdaten des zugehörigen Referenzstandards verglichen werden und das geänderte Automatisierungssystem verifiziert wird, wenn die Referenzdaten übereinstimmen.

2. Verfahren nach Anspruch 1, **dadurch gekennzeichnet, dass** als Referenzdaten die berechneten Endergebnisse des durchgeführten Testlaufs und/oder die Konfiguration der Simulationseinrichtung und/oder eine Definition der manuellen oder automatisierten Eingaben zum Steuern des Prüfstandes und/oder von der Simulationseinrichtung für den Testlauf erzeugten Daten bzw. Messwerte und/oder eine Definition des Testlaufes gespeichert werden.

3. Verfahren nach Anspruch 1 oder 2, **dadurch gekennzeichnet, dass** zur Überprüfung der korrekten Funktion der Automatisierungseinrichtung die korrekte Ansteuerung der Prüfumgebung und/oder die korrekte Übernahme und Verarbeitung der Daten bzw. Messwerte und/oder die Auswertealgorithmen der Ergebnisberechnung überprüft werden.

4. Verfahren nach einem der Ansprüche 1 bis 3, **dadurch gekennzeichnet, dass** durch Auswertung der Referenzdaten im Fehlerfall Rückschlüsse auf den betroffenen Problembereich gezogen werden.

5. Vorrichtung zur Verifizierung eines Automatisierungssystems für die Durchführung eines festgelegten, Daten oder Messwerte liefernden Testlaufes und/oder einer auf diesen Daten oder Messwerten beruhenden Ergebnisberechnung, wobei im Automatisierungssystem eine Simulationseinrichtung und eine Automatisierungseinrichtung vorgesehen sind, die über eine Schnittstelle miteinander verbunden sind und wobei in der Simulationseinrichtung ein Prüfstand und ein darauf zu prüfender Prüfling durch ein Prüfmodell und ein am Prüfstand angeordnetes Datenerfassungsgerät zur Erfassung von Daten oder eines Messwertes durch ein Gerätemodell nachgebildet sind und die Simulationseinrichtung gemäß dem durchzuführenden Testlauf von der Automatisierungseinrichtung angesteuert wird und wobei das Prüfmodell und Gerätemodell der Simulationseinrichtung Daten oder Messwerte erzeugt und diese über die Schnittstelle an die Automatisierungseinrichtung sendet und wobei im Automatisierungssystem für den durchgeführten Testlauf die Funktion der Automatisierungseinrichtung und/oder einer Ergebnisberechnung überprüft wird, **dadurch gekennzeichnet, dass** eine Speichereinheit vorgesehen ist, in der nach dem Feststellen der ordnungsgemäßen Funktion der Automatisierungseinrichtung und/oder der Ergebnisberechnung ein Referenzstandard für den Testlauf gespeichert wird, wobei im Referenzstandard die Simulationseinrichtung und/oder den durchgeführten Testlauf definierende Referenzdaten gespeichert sind und dass im Automatisierungssystem eine Auswerteeinheit vorgesehen ist, die die im Referenzstandard gespeicherten Referenzdaten mit Referenzdaten, die aufgrund einer Änderung des Automatisierungssystems wiederholten Testlauf ermittelt wurden, vergleicht und das geänderte Automatisierungssystem verifiziert, wenn die verglichenen Referenzdaten übereinstimmen.

6. Vorrichtung nach Anspruch 5, **dadurch gekennzeichnet, dass** im Automatisierungssystem eine Speichereinheit vorgesehen ist, in der verschiedene Referenzstandards abgespeichert sind.

7. Vorrichtung nach Anspruch 5 oder 6, **dadurch gekennzeichnet, dass** ein Hostsystem vorgesehen ist, das mit der Automatisierungseinrichtung und/oder der Simulationseinrichtung verbunden ist.

8. Vorrichtung nach Anspruch 7, **dadurch gekennzeichnet, dass** im Hostsystem ein Datenspeicher vorgesehen ist.

9. Vorrichtung nach einem der Ansprüche 5 bis 8, **dadurch gekennzeichnet, dass** ein Simulationskonfigurator vorgesehen ist, der mit der der Automatisierungseinrichtung und/oder der Simulationseinrichtung verbunden ist.

10. Vorrichtung nach Anspruch 9, **dadurch gekennzeichnet, dass** im Simulationskonfigurator eine Prüf- und/oder Gerätemodelldatenbank vorgesehen ist.

## Claims

1. A method for the verification of an automation system for the performance of a fixed test run which delivers data or measured values and/or a result calculation based on these data or measured values, whereas in a simulation apparatus, a test stand and a test subject to be tested thereon being simulated by a test model and a data acquisition device situated on the test stand for acquiring data or a measured value being simulated by a device model, and the simulation apparatus being controlled by an automation apparatus according to the test run to be performed, and the test model and device model of the simulation apparatus generating data or measured values and transmitting them to the automation apparatus, whereas in a first step, for the performed test run, the function of the automation apparatus and/or the result calculation being checked, **characterized in that** in a second step, after the establishment of the proper function of the automation apparatus and/or the result calculation, a reference standard for the test run being prepared, which stores reference data defining the simulation apparatus and/or the performed test run and in the case of a change of the automation system, in a third step, the test run being repeated and the reference data ascertained therefrom being compared to the reference data of the associated reference standard and the changed automation system being verified if the reference data correspond.

2. The method according to Claim 1, **characterized in that** the calculated final results of the performed test run and/or the configuration of the simulation apparatus and/or a definition of the manual or automated inputs for the control of the test stand and/or data or measured values generated by the simulation apparatus for the test run and/or a definition of the test run are stored as the reference data.

3. The method according to Claim 1 or 2, **characterized in that**, to check the correct function of the automation apparatus, the correct control of the test environment and/or the correct acceptance and processing of the data or measured values and/or the analysis algorithms of the result calculation are checked.

4. The method according to one of Claims 1 through 3, **characterized in that** conclusions about the relevant problem area are drawn by analyzing the reference data in case of error.

5. A device for verifying an automation system for the performance of a fixed test run which delivers data or measured values and/or a result calculation based on these data or measured values, whereas a simulation apparatus and an automation apparatus being provided in the automation system, which are connected to one another via an interface, and, in the simulation apparatus, a test stand and a test subject to be tested thereon being simulated by a test model and a data acquisition device situated on the test stand for acquiring data or a measured value being simulated by a device model, and the simulation apparatus being controlled by the automation apparatus according to the test run to be performed, and whereas the test model and device model of the simulation apparatus generating data or measured values and transmitting them via the interface to the automation apparatus, and whereas the function of the automation apparatus and/or a result calculation is checked in the automation system for the performed test run, **characterized in that** a storage unit is provided, in which a reference standard for the test run is stored after the establishment of the proper function of the automation apparatus and/or the result calculation, whereas reference data defining the simulation apparatus and/or the performed test run being stored in the reference standard, and that an analysis unit is provided in the automation system, which compares the reference data stored in the reference standard to reference data which were ascertained in a repeated test run due to a change of the automation system, and which verifies the changed automation system if the compared reference data correspond.

6. The device according to Claim 5, **characterized in that** a storage unit, in which various reference standards are stored, is provided in the automation system.

7. The device according to Claim 5 or 6, **characterized in that** a host system is provided, which is connected to the automation apparatus and/or the simulation apparatus.

8. The device according to Claim 7, **characterized in that** a data memory is provided in the host system.

9. The device according to one of Claims 5 through 8, **characterized in that** a simulation configurator is provided, which is connected to the automation apparatus and/or the simulation apparatus.

10. The device according to Claim 9, **characterized in that** a test and/or device model databank is provided in the simulation configurator.

## Revendications

1. Procédé pour la vérification d'un système d'automatisation pour l'exécution d'un test de fonctionnement prédéfini fournissant des données ou des valeurs de mesure, et/ou d'un calcul de résultat basé sur ces données ou valeurs de mesure, dans lequel un banc d'essai et un élément à vérifier sont reproduits dans un dispositif de simulation, par un modèle de vérification et par un appareil de saisie de données monté sur le banc d'essai pour la saisie de données ou d'une valeur de mesure par un modèle d'appareil, et le dispositif de simulation est actionné par un dispositif d'automatisation, conformément au test de fonctionnement à exécuter, et le modèle de vérification ainsi que le modèle d'appareil du dispositif de simulation produisent des données ou des valeurs de mesure et les envoient au dispositif d'automatisation, dans lequel, dans une première étape, le fonctionnement du dispositif d'automatisation et/ou les calculs de résultat sont vérifiés pour le test de fonctionnement exécuté, **caractérisé en ce que** dans une deuxième étape, après constat du fonctionnement correct du dispositif d'automatisation et/ou du calcul de résultat, une norme de référence est établie pour le test de fonctionnement, en enregistrant des données de référence définissant le dispositif d'automatisation et/ou le test de fonctionnement exécuté, et en cas de modification du système d'automatisation, le test de fonctionnement est répété au cours d'une troisième étape, et les données de référence ainsi obtenues sont comparées avec les données de référence de la norme de référence correspondante, et le système d'automatisation est vérifié lorsque les données de référence coïncident entre elles.

2. Procédé selon la revendication 1, **caractérisé en ce que** les résultats finaux du test de fonctionnement exécuté et/ou la configuration du dispositif d'automatisation et/ou une définition des entrées manuelles ou automatisées pour la commande du banc d'essai et/ou des données ou valeurs de mesure produites pour le test de fonctionnement par le dispositif d'automatisation et/ou une définition du test de fonctionnement, sont enregistrés comme données de référence.

3. Procédé selon la revendication 1 ou 2, **caractérisé en ce que** l'actionnement correct de l'environnement de test et/ou la transmission et le traitement corrects des données ou valeurs de mesure et/ou les algorithmes du calcul de résultat, sont vérifiés pour tester le fonctionnement correct du dispositif d'automatisation.

4. Procédé selon l'une des revendications 1 à 3, **caractérisé en ce qu'**en cas d'erreur, des conclusions peuvent être tirées du problème concerné, par l'évaluation des données de référence.

5. Dispositif pour la vérification d'un système d'automatisation pour l'exécution d'un test de fonctionnement prédéfini, fournissant des données ou des valeurs de mesure, et le calcul de résultat reposant sur ces données ou valeurs de mesure, dans lequel le système d'automatisation comprend un dispositif de simulation et un dispositif d'automatisation, reliés entre eux par une interface, et dans lequel un banc d'essai et un élément à tester sont reproduits dans le dispositif d'automatisation, par un modèle de vérification et un appareil de saisie de données monté sur le banc d'essai pour la saisie de données ou d'une valeurs de mesure par un modèle d'appareil, et le dispositif de simulation est actionné par le dispositif d'automatisation, et dans lequel le modèle de vérification ainsi que le modèle d'appareil du dispositif de simulation produisent des données ou des valeurs de mesure et les envoient au dispositif d'automatisation par le biais de l'interface, et le fonctionnement du dispositif d'automatisation et/ou un calcul de résultat sont vérifiés dans le système d'automatisation pour le test de fonctionnement exécuté, **caractérisé en ce qu'**il est prévu une mémoire, dans laquelle est stockée une norme de référence pour le test de fonctionnement, après constat du fonctionnement correct du dispositif d'automatisation et/ou du calcul de résultat, dans lequel sont stockées les données de référence définissant le dispositif d'automatisation et/ou le test de fonctionnement exécuté, et **en ce que** le système d'automatisation comprend une unité d'évaluation comparant les données de référence enregistrées dans la norme de référence avec des données de référence acquises par un test de fonctionnement répété en raison d'une modification du système d'automatisation, et vérifie le système d'automatisation modifié, lorsque les données de référence comparées coïncident entre elles.

6. Dispositif selon la revendication 5, **caractérisé en ce que** le système d'automatisation comprend une mémoire dans laquelle sont stockées différentes normes de référence.

7. Dispositif selon la revendication 5 ou 6, **caractérisé en ce qu'**il est prévu un système hôte relié au dispositif d'automatisation et/ou au dispositif de simulation.

8. Dispositif selon la revendication 7, **caractérisé en ce que** dans le système hôte, il est prévu une mémoire de données.

9. Dispositif selon l'une des revendications 5 à 8, **caractérisé en ce qu'**il est prévu un configurateur de simulation, relié au dispositif d'automatisation et/ou au dispositif de simulation.

10. Dispositif selon la revendication 9, **caractérisé en ce que** dans le configurateur de simulation, il est prévu une banque de données de modèles de vérification et/ou d'appareil.
